# EUROPÄISCHE PATENTANMELDUNG

(11) **EP 4 219 356 A1**
(43) Veröffentlichungstag der Anmeldung: **02.08.2023**
(21) Anmeldenummer: 22211320.1
(22) Anmeldetag: 05.12.2022
(51) Int. Cl.: B65G 47/52, B65B 35/38, B65B 43/08, B65G 47/71, B65G 47/91

(54) **TRANSPORTIEREN VON STRUKTURELEMENTEN FÜR VERPACKUNGEN**

(30) Priorität: 01.02.2022 DE 102022102311
(71) Anmelder: MULTIVAC Sepp Haggenmüller SE & Co. KG, 87787 Wolfertschwenden (DE)
(72) Erfinder: MAIER, Robert, 87727 Babenhausen (DE); PATZ, Dominik, 87435 Kempten (DE); ADERMANN, Philipp, 87439 Kempten (DE); HÖPNER, Bernd, 87437 Kempten (DE)
(74) Vertreter: Grünecker Patent- und Rechtsanwälte PartG mbB

(57) **Zusammenfassung**

In einem Verfahren zum Transportieren von Strukturelementen (17) von Verpackungen wird eine Gruppe von Strukturelementen (17) an eine Halteeinrichtung (35) übergeben, wobei die Strukturelemente (17) nach dem Übergeben jeweils von einem Halteelement (33) der Halteeinrichtung (31) aufgenommen sind. Die Halteelemente (33) werden relativ zueinander verstellt, so dass die von den Halteelementen (33) aufgenommen Strukturelemente (17) vor dem Verstellen in einem ersten Format vorliegen, in welchem die Strukturelemente (17) in Draufsicht in einem ersten Abstandsraster zueinander angeordnet sind, und nach dem Verstellen in einem zweiten Format vorliegen, in welchem die Strukturelemente (17) in Draufsicht in einem zweiten Abstandsraster zueinander angeordnet sind, wobei sich das zweite Abstandsraster von dem ersten Abstandsraster unterscheidet.

## Beschreibung

Die Erfindung betrifft das Transportieren von Strukturelementen für Verpackungen.

Aus der DE 10 2018 214 760 A1 ist eine Tiefziehverpackungsmaschine mit einer Transportvorrichtung bekannt, welche eine Transfereinheit aufweist, womit sich von außerhalb der Verpackungsmaschine zugeführte Trays innerhalb eines Maschinengestells der Verpackungsmaschine aufnehmen, weitertransportieren und an eine stromaufwärts neben der Transfereinheit liegende Formstation übergeben lassen. Die Transfereinheit ist als Saugplatte ausgebildet, welche mittels eines Linearantriebs in oder entgegen einer Arbeitsrichtung der Verpackungsmaschine zwischen einer Aufnahmeposition und einer Übergabeposition verstellbar gelagert ist. Die Saugplatte umfasst mehrere Aufnahmeformen, die ihnen zum Transport zur Verfügung gestellte Trays zumindest teilweise als Negativform formschlüssig aufnehmen können. Die Trays werden in einem vorbestimmten Format an ein innerhalb des Maschinengestells der Verpackungsmaschine angeordnetes vertikal verstellbares Hubwerk der Transportvorrichtung übergeben. Das Hubwerk ist dazu ausgebildet, die darauf positionierten Trays anzuheben, um die Trays der darüber in einer Aufnahmeposition positionierten Transfereinheit zu übergeben.

Es ist Aufgabe der Erfindung, einen verbesserten Weg zum Transportieren von Strukturelementen für Verpackungen bereitzustellen.

Gemäß einem Aspekt der Erfindung wird eine Transportanordnung für Strukturelemente für Verpackungen bereitgestellt. Die Transportanordnung umfasst eine Halteeinrichtung und eine Hubanordnung. Die Halteeinrichtung umfasst eine Gruppe von Haltelementen. Die Halteelemente sind jeweils zur haltenden Aufnahme eines zu transportierenden Strukturelements ausgebildet. Die Hubanordnung ist dazu konfiguriert, eine entlang einer vertikalen Richtung aufeinander zu verlaufende Relativbewegung zwischen einer zumindest zu Beginn der Relativbewegung in einer Übergabeposition befindlichen Gruppe von Strukturelementen und der Halteeinrichtung zu erzeugen. Die Gruppe von Strukturelementen wird am Ende der Relativbewegung von der Gruppe von Halteelementen aufgenommen. Die Halteelemente der Halteeinrichtung sind relativ zueinander zwischen einer Aufnahmekonfiguration und einer Abgabekonfiguration verstellbar. In der Aufnahmekonfiguration sind die Halteelemente relativ zueinander derart angeordnet, dass eine von den Halteelementen aufgenommene Gruppe von Strukturelementen in einem ersten Format vorliegt. In dem ersten Format sind die Strukturelemente in Draufsicht in einem ersten Abstandsraster zueinander angeordnet. In der Abgabekonfiguration sind die Halteelemente relativ zueinander derart angeordnet, dass eine von den Halteelementen aufgenommene Gruppe von Strukturelementen in einem zweiten Format vorliegt. In dem zweiten Format sind die Strukturelemente in Draufsicht in einem zweiten Abstandsraster zueinander angeordnet. Das zweite Abstandsraster unterscheidet sich von dem ersten Abstandsraster.

Da die Relativbewegung zwischen der Gruppe von Strukturelementen und der Halteeinrichtung zur Übergabe der Strukturelemente an die Halteeinrichtung entlang einer vertikalen Richtung erfolgt, lässt sich die Transportanordnung vergleichsweise platzsparend implementieren. Durch die Verstellbarkeit der Halteelemente relativ zueinander lässt sich das Format, in dem die Gruppe von Strukturelementen vorliegt, verändern, während die Strukturelemente von der Halteeinrichtung aufgenommen sind. Die Strukturelemente können in dem ersten Format an die Halteeinrichtung übergeben werden und anschließend durch Verstellen der Halteelemente von der Aufnahmekonfiguration in die Abgabekonfiguration in ein zweites Format gebracht werden. Die Halteeinrichtung kann die Gruppe von Strukturelementen in einem anderen Format abgeben als sie die Strukturelemente aufgenommen hat. Beispielsweise kann die Halteeinrichtung die Strukturelemente in dem ersten Format aufnehmen und in dem zweiten Format abgeben. Durch geeignete Wahl des ersten Formats und des zweiten Formats lässt sich die Transportanordnung effizient in ein übergeordnetes System integrieren, beispielsweise in eine Verpackungslinie. Wenn die Strukturelemente vor der Übergabe an die Halteeinrichtung in einem bestimmten Format vorliegen und nach einer Abgabe durch die Halteeinrichtung in einem anderen Format weiterverarbeitet werden sollen, kann die Formatangleichung durch die Halteeinrichtung selbst erfolgen. Eine der Transportanordnung vorgeordnete oder nachgeordnete zusätzliche Einrichtung zum Verändern einer gegenseitigen Anordnung der Strukturelemente kann somit entfallen.

Die Gruppe von Strukturelementen kann in der Übergabeposition in dem ersten Format vorliegen. Die Gruppe von Strukturelementen kann in dem ersten Format an die Halteeinrichtung übergeben werden. Die Gruppe von Strukturelementen kann während der vertikalen Relativbewegung zwischen der Gruppe von Strukturelementen und der Halteeinrichtung in dem ersten Format vorliegen. Das erste Format kann beliebiges Format sein, in dem die Strukturelemente vor der Übergabe an die Halteeinrichtung vorliegen. Beispielsweise kann das erste Format ein Format sein, in dem die Strukturelemente von einer der Transportanordnung vorgeordneten Arbeitsstation bearbeitet werden, oder ein Format sein, in welchem die Strukturelemente der Transportanordnung bereitgestellt werden, beispielsweise durch eine Entstaplereinrichtung.

Die Transportanordnung kann zudem eine Bereitstellungseinrichtung umfassen, welche dazu konfiguriert ist, die Gruppe von Strukturelementen in die Übergabepositionen zu bringen. Die Bereitstellungseinrichtung kann ein Förderband für die Strukturelemente umfassen. Die Bereitstellungseinrichtung kann dazu konfiguriert sein, die Gruppe von Strukturelementen in dem ersten Format in die Übergabeposition zu bringen. Die Bereitstellungseinrichtung kann dazu konfiguriert sein, von einer Entstaplereinrichtung bereitgestellte Strukturelemente in die Übergabeposition zu bringen.

Die Halteeinrichtung kann eine Verstellanordnung umfassen. Die Verstellanordnung kann dazu konfiguriert sein, die Halteelemente automatisch relativ zueinander zwischen der Aufnahmekonfiguration und der Abgabekonfiguration zu verstellen. Die Verstellanordnung kann zumindest einen Verstellantrieb umfassen, welcher das Verstellen der Halteelemente relativ zueinander zwischen der Aufnahmekonfiguration und der Abgabekonfiguration antreibt. Der zumindest eine Verstellantrieb kann als Servoantrieb ausgebildet sein.

Die Transportanordnung kann dahingehend konfigurierbar sein, dass das erste Format veränderlich anpassbar ist. Die Transportanordnung kann dahingehend konfigurierbar sein, dass das zweite Format veränderlich anpassbar ist. Die Transportanordnung kann ein Bedienerinterface umfassen, über welches das erste Format und/oder das zweite Format veränderlich anpassbar ist. Eine Anpassung des ersten Formats oder des zweiten Formats kann ein Anpassen des Abstandsrasters umfassen, in welchem die in dem jeweiligen Format befindlichen Strukturelemente relativ zueinander angeordnet sind. Durch eine Anpassbarkeit des ersten Formats und des zweiten Formats lässt sich die Transportanordnung flexibel in unterschiedlichen Anwendungsszenarien einsetzen. Eine Anpassbarkeit des ersten Formats und/oder des zweiten Formats erleichtert eine Anpassung der Transportanordnung an dieser vor- oder nachgeordneter Verarbeitungsschritte und an Eigenschaften der zu verarbeitenden Strukturelemente.

Die Halteelemente können zum Verstellen zwischen der Aufnahmekonfiguration und der Abgabekonfiguration in einer horizontalen Ebene relativ zueinander verschiebbar sein. Verschiebevektoren der Halteelemente beim Verstellen zwischen der Aufnahmekonfiguration und der Abgabekonfiguration können zumindest einen Anteil aufweisen, der in einer horizontalen Ebene verläuft. Verschiebevektoren der Halteelemente beim Verstellen zwischen der Aufnahmekonfiguration und der Abgabekonfiguration können eine vertikale Komponente umfassen. Verschiebevektoren der Halteelemente beim Verstellen zwischen der Aufnahmekonfiguration und der Abgabekonfiguration können ausschließlich in einer horizontalen Ebene liegen, also keine vertikale Komponente aufweisen.

Das Verstellen der Halteelemente relativ zueinander zwischen der Aufnahmekonfiguration und der Abgabekonfiguration kann reine Translationsbewegungen der Halteelemente relativ zueinander umfassen. Das Verstellen der Halteelemente relativ zueinander zwischen der Aufnahmekonfiguration und der Abgabekonfiguration kann reine Rotationsbewegungen der Halteelemente relativ zueinander umfassen. Das Verstellen der Halteelemente relativ zueinander zwischen der Aufnahmekonfiguration und der Abgabekonfiguration kann sowohl eine Translationsbewegung der Halteelemente relativ zueinander als auch eine Rotationsbewegung der Halteelemente relativ zueinander umfassen.

Bei dem Verstellen zwischen der Aufnahmekonfiguration und der Abgabekonfiguration können sämtliche Halteelemente der Halteeinrichtung relativ zueinander bewegt werden oder nur ein Teil der Halteelemente der Halteeinrichtung relativ zueinander bewegt werden.

Die Transportanordnung kann eine Transportantriebsanordnung umfassen. Die Transportantriebsanordnung kann dazu konfiguriert sein, die Halteeinrichtung zum Transportieren einer von den Halteelementen aufgenommenen Gruppe von Strukturelementen als Ganzes zu bewegen. Die Bewegung der Halteeinrichtung als Ganzes kann eine in einer horizontalen Ebene verlaufende Komponente umfassen oder eine ausschließlich in einer horizontalen Ebene verlaufende Bewegung sein. Die Bewegung der Halteeinrichtung als Ganzes kann eine Translationsbewegung umfassen. Die Bewegung der Halteeinrichtung als Ganzes kann eine Rotationsbewegung umfassen. Die Bewegung der Halteeinrichtung als Ganzes kann eine Translationsbewegung und eine Rotationsbewegung umfassen. Die Bewegung der Halteeinrichtung als Ganzes kann eine Bewegung entlang oder entgegen einer Produktionsrichtung einer von der Transportanordnung mit den Strukturelementen versorgten Verpackungsmaschine sein oder eine solche umfassen.

Die Transportanordnung kann dazu konfiguriert sein, die Halteelemente relativ zueinander zwischen der Aufnahmekonfiguration und der Abgabekonfiguration zu verstellen, während die Halteeinrichtung als Ganzes bewegt wird. Hierdurch lässt sich eine Formatumstellung zeitsparend während einem Transportieren der Strukturelemente durch die Halteeinrichtung durchführen.

Die Hubanordnung kann dazu konfiguriert sein, die Strukturelemente umzuformen. Insbesondere kann die Hubanordnung dazu konfiguriert sein, die Strukturelemente während der Relativbewegung zwischen der Gruppe von Strukturelementen und der Halteeinrichtung umzuformen. Das Umformen der Strukturelemente kann ein Falten oder Biegen der Strukturelemente umfassen. Eine von den Strukturelementen in Draufsicht auf die Strukturelemente eingenommene Fläche kann sich durch das Umformen der Strukturelemente verändern, insbesondere verringern. Das Umformen der Strukturelemente kann ein Umformen von einem flachen Materialzuschnitt in eine Verpackungsschale umfassen.

Während der Relativbewegung zwischen der Gruppe von Strukturelementen und der Halteeinrichtung durch die Hubanordnung kann ein Format, in dem die Strukturelemente angeordnet sind, gleichbleiben. Während der Relativbewegung zwischen der Gruppe von Strukturelementen und der Halteeinrichtung durch die Hubanordnung kann ein Abstandsraster, in welchem die Strukturelemente in Draufsicht relativ zueinander angeordnet sind, gleichbleiben. Das Abstandsraster kann durch eine gegenseitige Anordnung von geometrischen Mittelpunkten der Strukturelemente in Draufsicht auf die Strukturelemente oder durch eine gegenseitige Anordnung von Masseschwerpunkten der Strukturelemente in Projektion in eine horizontale Ebene definiert sein.

Die Hubanordnung kann dazu konfiguriert sein, während der Relativbewegung zwischen der Gruppe von Strukturelementen und der Halteeinrichtung die Strukturelemente zumindest bereichsweise an einem Element der Hubanordnung festzuhalten.

Die Hubanordnung kann Saugeinrichtungen umfassen, welche zum ansaugenden Halten der Strukturelemente während der Relativbewegung zwischen der Gruppe von Strukturelementen und der Halteeinrichtung ausgebildet sind. Die Saugeinrichtungen können dazu konfiguriert sein, die Strukturelemente beim Ansaugen der Strukturelemente umzuformen.

Die Hubanordnung kann dazu konfiguriert sein, die Gruppe von Strukturelementen aus der Übergabeposition entlang der vertikalen Richtung anzuheben. Alternativ oder zusätzlich kann die Hubanordnung dazu konfiguriert sein, die Halteeinrichtung entlang der vertikalen Richtung abzusenken.

Die Strukturelemente können in der Übergabeposition unterhalb der Halteeinrichtung vorgesehen sein.

Die Halteelemente können dazu konfiguriert sein, von unten in einer Relativbewegung an die Halteelemente herangeführte Strukturelemente aufzunehmen und zu halten. Die Halteelemente können Saugeinrichtungen zum ansaugenden Halten der Strukturelemente umfassen. Die Saugeinrichtungen der Halteelemente können von einer Unterdruckanordnung der Transportanordnung mit Unterdruck zum Ansaugen der Strukturelemente versorgt werden.

Die Halteelemente können eine zumindest im Wesentlichen zu den Strukturelementen komplementäre Form aufweisen. Am Ende der Relativbewegung können die Strukturelemente auf die Halteelemente aufgesteckt werden.

Die Halteelemente können jeweils eine Nut umfassen, welche zur Aufnahme eines Eingriffsabschnitts der Strukturelemente ausgebildet ist. Wenn die Strukturelemente als Verpackungsschalen an die Halteelemente übergeben werden, kann der Aufnahmeabschnitt ein die Öffnung der Verpackungsschale umlaufender Randbereich der Verpackungsschale sein. Eine Aufnahme des Aufnahmebereichs der Strukturelemente in der Nut der Halteelemente kann einem Verformen, insbesondere einem Zurückverformen, der Strukturelemente entgegenwirken.

Die Strukturelemente können ein faserhaltiges Material umfassen, insbesondere ein naturfaserhaltiges Material. Die Strukturelemente können ein Papiermaterial oder ein Kartonmaterial umfassen. Die Strukturelemente können ein Kunststoffmaterial umfassen. Die Strukturelemente können jeweils einen Ausschnitt aus einem Materialbogen umfassen. Die Strukturelemente können ein Laminat mehrerer Materialschichten umfassen. Die Strukturelemente können ein Laminat einer Kartonschicht und einer Kunststoffschicht umfassen. Die Strukturelemente können ein Laminat einer Papierschicht und einer Kunststoffschicht umfassen.

Gemäß einem weiteren Aspekt der Erfindung wird eine Verpackungsmaschine mit der beschriebenen Transportanordnung bereitgestellt. Die Verpackungsmaschine kann als Tiefziehverpackungsmaschine ausgebildet sein. Die Verpackungsmaschine kann eine Formstation umfassen.

Die Formstation kann dazu konfiguriert sein, durch Tiefziehen Verpackungsmulden in einer entlang einer Produktionsrichtung der Verpackungsmaschine geförderten Unterfolienbahn auszubilden. Die Transportanordnung kann dazu konfiguriert sein, die Strukturelemente der Formstation zuzuführen. Die Transportanordnung kann dazu konfiguriert sein, die Strukturelemente der Formstation in Form von Verpackungsschalen zuzuführen. Die Formstation kann dazu konfiguriert sein, die Unterfolienbahn in die Strukturelemente hinein umzuformen, sodass die Strukturelemente mit der Unterfolienbahn gewissermaßen laminiert werden. Die Formstation kann dazu ausgebildet sein, die Strukturelemente mit der Unterfolienbahn zu verbinden, insbesondere durch Wärme und/oder Druckeinwirkung.

Die Verpackungsmaschine kann eine Siegelstation aufweisen, welche insbesondere bezüglich der Produktionsrichtung der Verpackungsmaschine stromabwärts der Formstation angeordnet ist. Die Siegelstation kann dazu konfiguriert sein, die Verpackungsmulden durch Ansiegeln einer Oberfolie zu verschließen.

Die Halteeinrichtung der Transportanordnung kann dazu konfiguriert sein, als Ganzes entlang oder entgegen der Produktionsrichtung der Verpackungsmaschine bewegt zu werden. Die Halteeinrichtung kann unterhalb einer Transportebene der Unterfolienbahn innerhalb der Verpackungsmaschine beweglich sein.

Gemäß einem weiteren Aspekt der Erfindung wird ein Verfahren zum Transportieren von Strukturelementen von Verpackungen bereitgestellt. Eine Gruppe von Strukturelementen wird an eine Halteeinrichtung übergeben. Die Strukturelemente sind nach dem Übergeben an die Halteeinrichtung jeweils von einem Halteelement der Halteeinrichtung aufgenommen. Die Halteelemente werden relativ zueinander so verstellt, dass die von den Halteelementen aufgenommenen Strukturelemente vor dem Verstellen in einem ersten Format vorliegen und nach dem Verstellen in einem zweiten Format vorliegen. In dem ersten Format sind die Strukturelemente in Draufsicht in einem ersten Abstandsraster zueinander angeordnet. In dem zweiten Format sind die Strukturelemente in Draufsicht in einem zweiten Abstandsraster zueinander angeordnet. Das zweite Abstandsraster unterscheidet sich von dem ersten Abstandsraster.

Die Halteeinrichtung kann als Ganzes bewegt werden, um die von den Halteelementen aufgenommenen Strukturelemente zu transportieren.

Die Strukturelemente können beim Übergeben an die Halteeinrichtung in dem ersten Format vorliegen. Die Strukturelemente können in dem zweiten Format wieder von der Halteeinrichtung abgegeben werden.

Die Strukturelemente können hängend von den Halteelementen aufgenommen werden.

Zum Übergeben der Strukturelemente an die Halteeinrichtung kann eine Relativbewegung zwischen den Strukturelementen und der Halteeinrichtung erfolgen. Die Relativbewegung zwischen den Strukturelementen und der Halteeinrichtung kann entlang einer vertikalen Richtung erfolgen. Während der Relativbewegung zwischen den Strukturelementen und der Halteeinrichtung können die Strukturelemente umgeformt werden, insbesondere durch eine Hubanordnung. Bei dem Umformen der Strukturelemente kann sich in Draufsicht auf die Gruppe von Strukturelementen ein Zwischenraum zwischen benachbarten Strukturelementen ändern. Der Zwischenraum kann sich bei dem Umformen insbesondere erhöhen.

Gemäß einem weiteren Aspekt der Erfindung wird eine Verwendung einer Halteeinrichtung mit einer Gruppe von relativ zueinander beweglichen Halteelementen zum Transportieren einer Gruppe von Strukturelementen für Verpackungen durch eine Translationsbewegung der Halteeinrichtung als Ganzes und zum Verändern einer gegenseitigen Lage der Strukturelemente zueinander durch Verschieben der Halteelemente relativ zueinander bereitgestellt.

Gemäß den beschriebenen Aspekten der Erfindung werden eine Transportanordnung, eine Verpackungsmaschine, ein Verfahren zum Transportieren von Strukturelementen von Verpackungen, und eine Verwendung einer Halteeinrichtung bereitgestellt. Bezüglich eines dieser Aspekte beschriebenen Merkmale, Erläuterungen und Vorteile lassen sich auf die anderen Aspekte übertragen. Das Verfahren und die Verwendung können an der Transportanordnung oder der Verpackungsmaschine durchgeführt werden. Die Transportanordnung und die Verpackungsmaschine können dazu geeignet, ausgelegt und/oder konfiguriert sein, das Verfahren oder die Verwendung durchzuführen.

Im Folgenden wird die Erfindung unter Bezugnahme auf die Figuren anhand von Ausführungsformen weiter beschrieben. Es zeigt:
Fig. 1 eine schematische Seitenansicht einer Verpackungsmaschine gemäß einer Ausführungsform;
Fig. 2 eine schematische Draufsicht auf eine Verpackungsmaschine gemäß einer Ausführungsform;
Fig. 3 eine schematische Darstellung einer Transportanordnung für Strukturelemente gemäß einer Ausführungsform;
Fig. 4 eine schematische Darstellung unterschiedlicher Schritte während der Übergabe einer Gruppe von Strukturelementen auf die Halteeinrichtung gemäß einer Ausführungsform; und
Fig. 5 eine schematische Darstellung eines Überführens einer Gruppe von Strukturelementen zwischen einem ersten Format und einem zweiten Format durch Verstellen der Halteelemente der Halteeinrichtung einer Transportanordnung gemäß einer Ausführungsform.

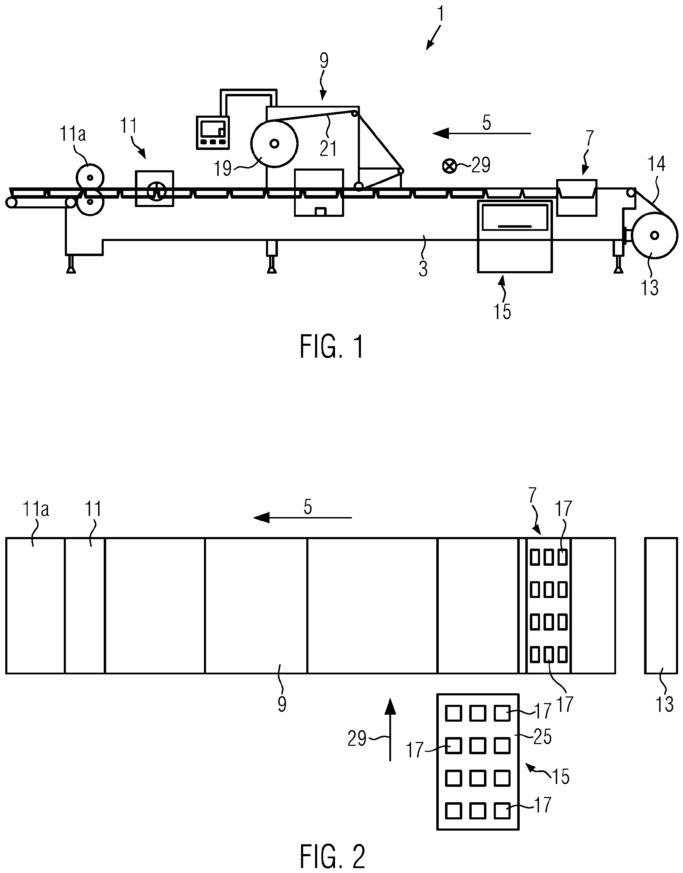

Figur 1 zeigt in schematischer Seitenansicht eine als Tiefziehverpackungsmaschine ausgebildete Verpackungsmaschine 1 gemäß einer Ausführungsform. Die Verpackungsmaschine 1 umfasst ein Maschinengestell 3, an welchem entlang einer Produktionsrichtung 5 hintereinander eine Formstation 7, eine Siegelstation 9, eine Querschneidstation 11 und eine Längsschneidstation 11a angeordnet sind. Eine Vorschubeinrichtung fördert eine von einer Vorratsrolle 13 abgezogene Unterfolienbahn 14 entlang der Produktionsrichtung 5 nacheinander durch die Formstation 7 und die Siegelstation 9 und zu den Schneidstationen 11a.

Eine Transportanordnung 15 versorgt die Formstation 7 mit Strukturelementen 17 in Form von Verpackungsschalen. Insbesondere können die Strukturelemente 17 von der Transportanordnung 15 in ein Unterwerkzeug der Formstation 7 gebracht werden. Durch Zusammenwirken des Unterwerkzeugs und eines Oberwerkzeugs der Formstation 7 wird die Unterfolienbahn 14 von oben in die als Verpackungsschalen ausgebildeten Strukturelemente 17 eingeformt und mit den Strukturelementen 17 verbunden. Ein Innenraum der Verpackungsschalen wird in der Formstation 7 gewissermaßen mit der Unterfolienbahn 14 ausgekleidet.

Bezüglich der Produktionsrichtung 5 zwischen der Formstation 7 und der Siegelstation 9 werden zu verpackende Produkte in die Verpackungsschalen eingebracht. In der Siegelstation 9 werden die Verpackungsschalen durch Ansiegeln einer von einer Vorratsrolle 19 abgezogenen Oberfolienbahn 21 an die Unterfolienbahn 14 verschlossen. Dies kann durch siegelndes Zusammenwirken eines Werkzeugunterteils und eines Werkzeugoberteils der Siegelstation 9 erfolgen, insbesondere unter Wärmeeinwirkung und/oder Druckeinwirkung. In den Schneidstationen 11, 11a werden die einzelnen Verpackungsschalen aus dem Folienverbund separiert.

Zur Steigerung der Produktionsleistung der Verpackungsmaschine 1 werden in der Formstation 7 und der Siegelstation 9 mehrere Verpackungsschalen gleichzeitig bearbeitet. Im dargestellten Ausführungsbeispiel werden jeweils 12 Verpackungsschalen gleichzeitig bearbeitet, welche in einem 4 × 3 Format vorliegen.

Im Folgenden wir die Zuführung der Strukturelemente 17 durch die Transportanordnung 15 näher beschrieben.

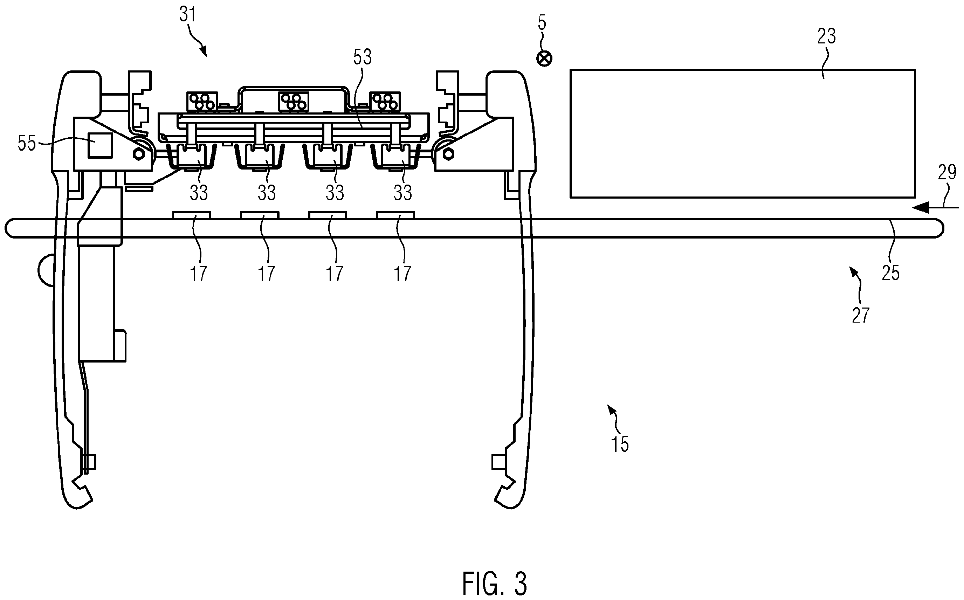

Figur 3 zeigt eine ausschnittsweise Schnittansicht durch die Verpackungsmaschine 1 im Bereich der Transportanordnung 15, wobei die Schnittebene senkrecht zur Produktionsrichtung 5 steht. In der dargestellten Ausführungsform werden die Strukturelemente 17 von einer Entstapeleinrichtung 23 auf eine Fördereinrichtung 25 einer Bereitstellungseinrichtung 27 abgestapelt. Die Abstapeleinrichtung 23 ist bezüglich der Produktionsrichtung 5 seitlich versetzt vorgesehen.

In Figur 2 ist die Abstapeleinrichtung 23 nicht dargestellt, sodass die Fördereinrichtung 25 mit darauf abgestapelten Strukturelementen 17 in der in Figur 2 gezeigten Draufsicht auf die Verpackungsmaschine 1 sichtbar sind. In der dargestellten Ausführungsform werden die Strukturelemente 17 derart abgestapelt, dass sie auf der Fördereinrichtung 25 in einem ersten Format vorliegen, welches in der dargestellten Ausführungsform ein 4 × 3 ist.

Die Strukturelemente 17 werden vorzugsweise als flache Materialzuschnitte aus Karton oder Papier abgestapelt. Mittels der Fördereinrichtung 25 der Bereitstellungseinrichtung 27 werden die abgestapelten Strukturelemente 17 in dem ersten Format entlang einer Zuführrichtung 29, welche senkrecht zur Produktionsrichtung 5 der Verpackungsmaschine 1 steht, in einen Bereich innerhalb des Maschinengestells 3 der Verpackungsmaschine 1 gefördert.

Figur 3 zeigt eine Gruppe von Strukturelementen 17 in dem ersten Format in einer Übergabeposition innerhalb eines von dem Maschinenrahmen 3 definierten Bereichs. In der Übergabeposition befinden sich die Strukturelemente 17 direkt unter einer Halteeinrichtung 31 der Transportanordnung 15. Die Halteeinrichtung 31 umfasst eine Gruppe von Halteelementen 33. Die Anzahl der Halteelemente 33 entspricht der Anzahl der Strukturelemente 17 in einem Format. In der in Figur 3 dargestellten Situation sind die Halteelemente 33 in einer horizontalen Ebene entsprechend der Anordnung der Strukturelemente 17 in dem ersten Format relativ zueinander angeordnet.

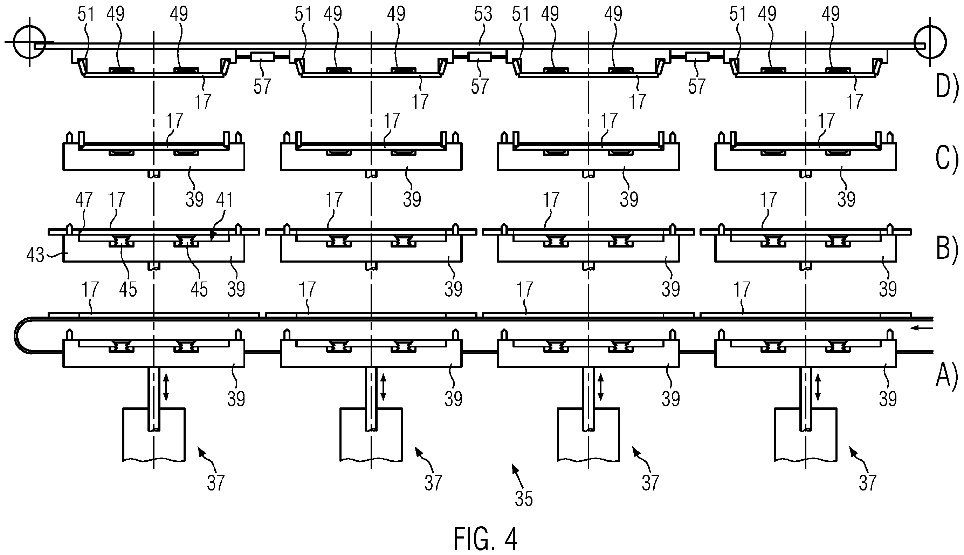

Aus der in Figur 3 dargestellten Übergabeposition heraus werden die Strukturelemente 17 mit einer in Figur 3 nicht dargestellten Hubanordnung 35 in einer vertikalen Richtung angehoben und an die Halteelemente 33 der Halteeinrichtung 31 übergeben. Dies ist schematisch in Figur 4 dargestellt, ebenfalls in einer Schnittansicht mit einer Schnittebene senkrecht zur Produktionsrichtung 5. Wie in Figur 4 dargestellt, umfasst die Hubanordnung 35 den einzelnen Strukturelementen 17 des Formats zugeordnete Hubelemente 37, welche jeweils einen Hubantrieb aufweisen. Alternativ könnten die Hubelemente 37 miteinander verbunden sein, sodass nur ein einziger gemeinsamer Hubantrieb erforderlich ist. Figur 4 zeigt in den Teilen A), B), C) und D) eine zeitliche Abfolge des Anhebens der Strukturelemente 17 durch die Hubanordnung 35. Die Hubelemente 37 umfassen jeweils ein Hubbett 39, welches von unten auf das korrespondierende Strukturelement 17 zufährt und dieses nach oben mitnimmt. Im angehobenen Zustand in Teil B) von Figur 3 haben die Hubelemente 37 die Strukturelemente 17 bereits über die Fördereinrichtung 25 angehoben. Die Hubbetten 39 weisen jeweils einen nach oben hin offenen Formbereich 41 auf, welcher umlaufend von einem Einfassbereich 43 umgeben ist. In dem Formbereich 41 sind Ansaugöffnungen 45 in den Hubbetten 39 vorgesehen. Durch Anlegen eines Unterdrucks in dem Formbereich 41 durch die Ansaugöffnungen 45 werden die Strukturelemente 17 während der weiteren Bewegung nach oben in den Formbereich 41 hineingesaugt. Die Strukturelemente 17 knicken dabei an Sollknickstellen 47 entsprechend einem Grenzbereich zwischen dem Formbereich 41 und dem Einfassbereich 43 um und werden somit in Verpackungsschalen umgeformt.

In Teil C) in Figur 4 sind die Strukturelemente 17 bereits umgeformt. Die Strukturelemente 17 werden weiter nach oben bewegt, um schließlich, wie in Teil D) gezeigt, an die Halteelemente 33 übergeben zu werden. Die Halteelemente 33 umfassen Ansaugöffnungen 49, um die Strukturelemente 17 durch Anlegen eines Unterdrucks durch die Ansaugöffnungen 49 an die Halteelemente 33 ansaugen und so in einem hängenden Zustand an den Halteelementen 33 zu halten.

Die Halteelemente 33 umfassen in der dargestellten Ausführungsform jeweils eine umlaufende, nach unten geöffnete Nut 51, in welche ein nach oben geklappter Randbereich der Strukturelemente 17 eingreift. Hierdurch wird ein Rückklappen der Randbereiche der Strukturelemente 17 verhindert. Nach der Übergabe der Strukturelemente 17 an die Halteeinrichtung 31 fahren die Hubelemente 39 der Hubanordnung 35 wieder nach unten, um in Bereitschaft zu gehen, das nächste Format von Strukturelementen 17 aufzunehmen.

Die Halteelemente 33 der Halteanordnung 31 sind an einem Grundkörper 53 der Halteanordnung 31 vorgesehen. Der Grundkörper 53 ist bezüglich der Produktionsrichtung 5 der Verpackungsmaschine 1 beweglich verschiebbar gelagert. Die Transportanordnung 15 umfasst eine in Figur 3 schematisch dargestellte Transportantriebsanordnung 55, welche dazu konfiguriert ist, die Halteeinrichtung 31 entsprechend dieser Lagerung als Ganzes zu bewegen. Nach dem Übergeben der Strukturelemente 17 auf die Halteelemente 33 wird die Halteeinrichtung 31 durch die Transportantriebsanordnung 55 als Ganzes entgegen der Produktionsrichtung 5 in die Formstation 7 verfahren. Vor oder während diesem Verfahren der Halteeinrichtung 31 wird das Format der von den Halteelementen 33 aufgenommenen Gruppe von Strukturelementen 17 von dem ersten Format zu einem zweiten Format geändert. Dies erfolgt durch ein Verschieben der Aufnahmeelemente 33 relativ zueinander in einer horizontalen Ebene. Entsprechende Verstelleinrichtungen 57 sind in Figur 4 schematisch dargestellt.

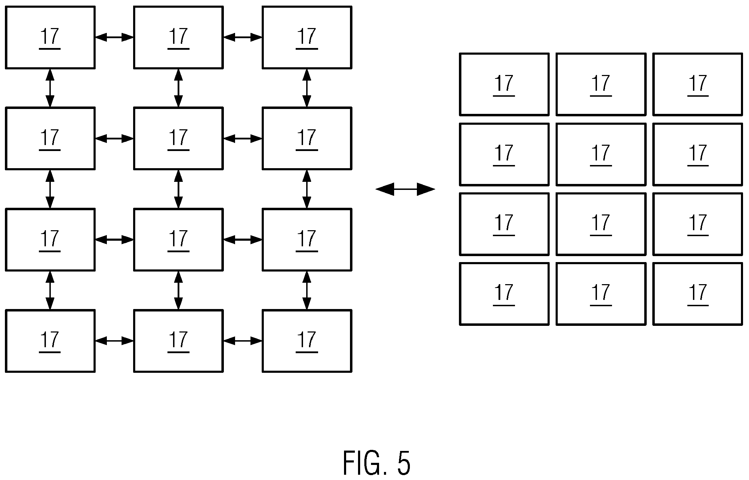

Durch das Ändern des Formats, in dem die Strukturelemente 17 vorliegen, lässt sich die Anordnung der Strukturelemente 17 an die Erfordernisse der Formstation 7 anpassen. Figur 5 zeigt im linken Teil in Draufsicht wie die Strukturelemente 17 nach der Übergabe an die Halteeinrichtung 31 in dem ersten Format vorliegen. Aus dem ersten Format heraus werden die Strukturelemente 17 durch Verfahren der Aufnahmeelemente 33 relativ zueinander in ein im rechten Teil von Figur 5 dargestelltes zweites Format gebracht, in welchem die Strukturelemente 17 näher beieinanderliegen. Ein Zusammenrücken der Strukturelemente 17 nach der Übergabe an die Halteeinrichtung 31 kann besonders vorteilhaft sein, um einen nach dem Umformen der Strukturelemente 17 zu Verpackungsschalen vergrößerten Abstand zwischen benachbarten Strukturelementen 17 zu verringern, damit die Strukturelemente 17 in einem ausreichend kompakten Format an die Formstation 7 übergeben werden können. Denkbar wäre aber auch, die Strukturelemente 17 beim Übergang von dem ersten Format in das zweite Format weiter auseinander zu fahren oder die gegenseitige Lage der Strukturelemente 17 an anderweitig zu verändern.

Die Strukturelemente 17 werden von der Halteeinrichtung 31 in dem zweiten Format an die Formstation 7 übergeben. Fig. 2 zeigt schematisch die in dem zweiten Format in der Formstation 7 angeordneten Strukturelemente 17. Nachdem die Strukturelemente in dem zweiten Format an die Formstation 7 übergeben wurden, verfährt die Transportantriebsanordnung 55 die Halteeinrichtung 31 entlang der Produktionsrichtung 5, um zur Aufnahme der nächsten Gruppe von Strukturelementen 17 bereitzustehen. Zudem werden die Aufnahmeelemente 33 relativ zueinander wieder verfahren, um die nächste Gruppe von Strukturelementen 17 in dem ersten Format aufnehmen zu können.

## Patentansprüche

1. Transportanordnung (15) für Strukturelemente (17) für Verpackungen, umfassend:
eine Halteeinrichtung (31) mit einer Gruppe von Halteelementen (33), wobei die Halteelemente (33) jeweils zur haltenden Aufnahme eines zu transportierenden Strukturelements (17) ausgebildet sind; und
eine Hubanordnung (35), welche dazu konfiguriert ist, eine entlang einer vertikalen Richtung aufeinander zu verlaufende Relativbewegung zwischen einer zumindest zu Beginn der Relativbewegung in einer Übergabeposition befindlichen Gruppe von Strukturelementen (17) und der Halteeinrichtung (31) zu erzeugen, wobei die Gruppe von Strukturelementen (17) am Ende der Relativbewegung von der Gruppe von Halteelementen (33) aufgenommen wird;
wobei die Halteelemente (33) der Halteeinrichtung (31) relativ zueinander zwischen einer Aufnahmekonfiguration und einer Abgabekonfiguration verstellbar sind;
wobei die Halteelemente (33) in der Aufnahmekonfiguration relativ zueinander derart angeordnet sind, dass eine von den Halteelementen (33) aufgenommene Gruppe von Strukturelementen (17) in einem ersten Format vorliegt, in welchem die Strukturelemente (17) in Draufsicht in einem ersten Abstandsraster zueinander angeordnet sind; und
wobei die Halteelemente (33) in der Abgabekonfiguration relativ zueinander derart angeordnet sind, dass eine von den Halteelementen (33) aufgenommene Gruppe von Strukturelementen (17) in einem zweiten Format vorliegt, in welchem die Strukturelemente (17) in Draufsicht in einem zweiten Abstandsraster zueinander angeordnet sind, wobei sich das zweite Abstandsraster von dem ersten Abstandsraster unterscheidet.

2. Transportanordnung nach Anspruch 1, wobei die Gruppe von Strukturelementen (17) in der Übergabeposition in dem ersten Format vorliegt.

3. Transportanordnung nach Anspruch 1 oder 2, zudem umfassend eine Bereitstellungseinrichtung (27), welche dazu konfiguriert ist, die Gruppe von Strukturelementen (17) in die Übergabeposition zu bringen.

4. Transportanordnung nach einem der vorangehenden Ansprüche, wobei die Halteeinrichtung (31) eine Verstellanordnung umfasst, welche dazu konfiguriert ist, die Halteelemente (33) automatisch relativ zueinander zwischen der Aufnahmekonfiguration und der Abgabekonfiguration zu verstellen.

5. Transportanordnung nach einem der vorangehenden Ansprüche, wobei die Halteelemente (33) zum Verstellen zwischen der Aufnahmekonfiguration und der Abgabekonfiguration in einer horizontalen Ebene relativ zueinander verschiebbar sind.

6. Transportanordnung nach einem der vorangehenden Ansprüche, zudem umfassend eine Transportantriebsanordnung (55), welche dazu konfiguriert ist, die Halteeinrichtung (31) zum Transportieren einer von den Halteelementen aufgenommen Gruppe von Strukturelementen (17) als Ganzes zu bewegen.

7. Transportanordnung nach einem der vorangehenden Ansprüche, wobei die Hubanordnung (35) dazu konfiguriert ist, die Strukturelemente (17) während der Relativbewegung zwischen der Gruppe von Strukturelementen (17) und der Halteeinrichtung (31) umzuformen.

8. Transportanordnung nach einem der vorangehenden Ansprüche, wobei die Hubanordnung (35) dazu konfiguriert ist, die Gruppe von Strukturelementen (17) aus der Übergabeposition entlang der vertikalen Richtung anzuheben.

9. Verfahren zum Transportieren von Strukturelementen (17) von Verpackungen, umfassend:
Übergeben einer Gruppe von Strukturelementen (17) an eine Halteeinrichtung (35), wobei die Strukturelemente (17) nach dem Übergeben jeweils von einem Halteelement (33) der Halteeinrichtung (31) aufgenommen sind; und
Verstellen der Halteelemente (33) relativ zueinander, so dass die von den Halteelementen (33) aufgenommen Strukturelemente (17) vordem Verstellen in einem ersten Format vorliegen, in welchem die Strukturelemente (17) in Draufsicht in einem ersten Abstandsraster zueinander angeordnet sind, und nach dem Verstellen in einem zweiten Format vorliegen, in welchem die Strukturelemente (17) in Draufsicht in einem zweiten Abstandsraster zueinander angeordnet sind, wobei sich das zweite Abstandsraster von dem ersten Abstandsraster unterscheidet.

10. Verfahren nach Anspruch 9, wobei die Halteeinrichtung (31) als Ganzes bewegt wird, um die von den Halteelementen (33) aufgenommen Strukturelemente (17) zu transportieren.

11. Verfahren nach Anspruch 9 oder 10, wobei die Strukturelemente (17) beim Übergeben an die Halteeinrichtung (31) in dem ersten Format vorliegen, und insbesondere in dem zweiten Format wieder von der Halteeinrichtung (31) abgegeben werden.

12. Verfahren nach einem der Ansprüche 9 bis 11, wobei die Strukturelemente (17) hängend von den Halteelementen (33) aufgenommen werden.

13. Verfahren nach einem der Ansprüche 9 bis 12, wobei zum Übergeben der Strukturelemente (17) an die Halteeinrichtung (31) eine Relativbewegung, insbesondere eine Relativbewegung entlang einer vertikalen Richtung, zwischen den Strukturelementen (33) und der Halteeinrichtung (31) erfolgt und die Strukturelemente (17) während dieser Relativbewegung umgeformt werden.

14. Verfahren nach Anspruch 13, wobei sich bei dem Umformen in Draufsicht auf die Gruppe von Strukturelementen (17) ein Abstand zwischen benachbarten Strukturelementen (17) ändert, insbesondere erhöht.

15. Verwendung einer Halteeinrichtung (31) mit einer Gruppe von relativ zueinander beweglichen Halteelementen (33) zum Transportieren einer Gruppe von Strukturelementen (17) für Verpackungen durch eine Translationsbewegung der Halteeinrichtung (31) als Ganzes und zum Verändern einer gegenseitigen Lage der Strukturelemente (17) zueinander durch Verschieben der Halteelemente (33) relativ zueinander.
